# EUROPEAN PATENT SPECIFICATION

(11) **EP 3 768 904 B1**
(45) Date of publication and mention of the grant of the patent: **09.11.2022**
(21) Application number: 19714247.4
(22) Date of filing: 08.03.2019
(51) Int. Cl.: E03D 5/00, E03B 1/04, E03B 3/02, E03B 3/03

(54) **SYSTEM FOR COLLECTING AND RECOVERING THE DISCHARGE WATER OF HOUSEHOLD INSTALLATIONS**
SYSTEM ZUM SAMMELN UND RÜCKGEWINNEN DES ABWASSERS VON HAUSHALTSINSTALLATIONEN
SYSTÈME DE COLLECTE ET DE RÉCUPÉRATION D'EAU D'ÉVACUATION D'INSTALLATIONS DOMESTIQUES

(30) Priority: 22.03.2018 IT 201800003871
(43) Date of publication of application: 27.01.2021
(73) Proprietor: DI NALLO, Domenico, 00175 Roma (RM) (IT)
(72) Inventor: DI NALLO, Domenico, 00175 Roma (RM) (IT)
(74) Representative: Fiammenghi, Eva
(86) International application number: PCT/IB2019/051886
(87) International publication number: WO 2019/180531

(56) References cited:
- WO-A1-2011/093700
- WO-A1-2013/027216
- CA-A1- 2 020 824
- US-A- 5 307 524
- US-A- 5 873 383
- US-A- 5 937 455

## Description

### Description

### 5 Field of the art

The present invention operates in the installation field, in particular linked to water and climate-control installations. Still more in detail, the present invention regards a new and innovative system for collecting and recovering the discharge of household installations according to claim 1, said system comprising a container of the discharge water.

### Prior art

Presently, nearly all homes are provided with a climate-control installation for maintaining optimal internal thermo-hygrometric conditions. The climate-control units and also the condensation boilers however have critical issues regarding effluent water discharges. Indeed, trickles of water can often be observed in proximity to external climate-control units, or buckets and other containers which are positioned at the water loss site in order to prevent the dispersion thereof onto the street.

The presence of these containers often causes the proliferation of insects and mosquitoes, above all in the summer, and also causes the emission of foul odors due to the molds that are formed therein.

When the owner of the house is more responsible, he/she frequently empties the collected waters, having to leave the home to reach the site of installation of the climate-control unit motor.

Even if this operation may seem simple, and overall a normal routine maintenance operation, it is an actual problem for elderly people and for handicapped people.

Several international patents have as object systems for recycling and purifying water. For example, the patent WO 2008 015 939 regards a method for reusing discharge water by aggregating, with the latter, ozone and a solid substance with coagulant function and in the end filtering the water.

The patent WO 2002 0142282, instead, is directed towards domestic use and claims a water treatment system to be installed below the surface of the kitchen, which includes an osmotic membrane and an electrolytic cell.

Other patents regard climate-control units and boilers per se, but nothing seems to refer to the recycling and disposal of the effluent water.

WO2013/027216 discloses a system for collecting and accumulating excess water from one or more in-building sources and delivering it to one or more flushing toilet tanks.

WO2011/093700 relates to a device for through feed of greywater to a water user, comprising a housing for receiving therein greywater supplied via a greywater feed, a first flush pipe extending downward from the housing and connected directly to a sewer outlet, and a second flush pipe extending downward from the housing and connected to a water user.

US5873383 describes 3 storage vessels stacked at positioned lower than a rainwater gutter.

US5937455 discloses an electrically operated solenoid valve for use on a flush toilet tank, and capable of variable adjustment. This system comprises a float switch mounted on a calibrated bracket secured to a tank, such that the float for the float switch is mounted within the tank and the height of the float above the tank floor can be adjusted utilizing the bracket. CA2020824 relates to an arrangement for sensing grey water in which a bathtub, shower stall, self-contained toilet bowl or the like is constructed with respective false bottom grey water collecting tanks.

US5307524 describes an automatic toilet seat device which will cause a toilet seat to be either raised or lowered at the push of a single button and further, will automatically lower the toilet seat after the flush action of the toilet.

Therefore, the object of the present patent is that of describing a system for collecting the water that presently ends up poured on the street, such water resulting from the operation of the water installations for climate-control and heating of the sanitary water, which enables the recycling thereof.

### Description of the invention

According to the present invention, a system according to claim 1 is achieved for collecting and recovering the discharge water of climate-control plants and condensation boilers which effectively resolves the abovementioned problems.

Advantageously, the object of the system according to claim 1, object of the present invention, is to be arranged at the discharge duct of the water operating installation to which it is connected. The most advantageous mode of installation, which in any case does not limit other possibilities, always falling within the protective scope of the present patent, is below the element of the water operating installation, for example below the motor of the climate-control unit. Still more advantageously, it can be provided for that the container door described hereinbelow, which allows access to the functional elements of the system, opens towards the interior of the building in which the system is installed. In this manner, the water recovery operations can be carried out without leaving home, considerably facilitating the work for elderly and handicapped people.

The base elements forming the system are at least the following:
A) A framework and at least one liquids container, made of any one synthetic or natural polymer, preferably of transparent plastic, with maximum capacity comprised between 5 1 and 20 1, provided with at least one upper opening, one lower opening and one safety hole. Said upper opening is that suitable of receiving the water coming from the discharge duct of a water operating installation. The lower opening, instead, is that from which it is possible to discharge the water of the container, according to the modes described hereinbelow. The safety hole enables the outflow of the water when the container is nearly completely full, should the various signals be ignored by the user.
B) A least one tap included in the shape of the framework, said tap is advantageously connected to the lower opening of said container, provided with an opening valve adapted to be open and closed by a user to reversibly enable or block the outflow of the water contained in said container to the exterior. Said at least one tap being of rotatable type suitable to rotate outward from the framework in order to allow the tap to rotate in the horizontal plane and
   the user to direct the water jet in the desired direction, e.g. into a collection container.
C) A level detector, constituted by a vertical rod immersed in the container, with length at least equal to the depth of said container so as to reach the bottom. Said detector is advantageously provided with a plurality of sensors equidistant from each other, suitable to detect the filling level of the container. Each of said sensors is advantageously connected to
D) A corresponding LED light of a light signaling device. The latter is suitable to show the user, at a glance, the filling level of the container.
E) An acoustic signaling device, also connected to said level detector, advantageously adapted to emit a predetermined sound, possibly repeated at regular and pre-established time intervals, when the level of the water present in the container exceeds a pre-established threshold value.
F) The framework, made of any one metal or metal alloy, preferably of aluminum, adapted
   to enclose all the above-mentioned equipment in a parallelepiped-shaped structure with dimensions comprised between 20 cm X 2.5 cm X 20 cm in height and 100 cm X 20 cm X 100 cm in height, preferably 50 cm X 5 or 7 cm X 80 cm in height. Said framework is provided with common engagement means, preferably metallic, suitable for allowing the stable installation thereof at a wall or at any one support structure. Said framework is also provided with at least one inlet hole, placed at the upper opening of the container, so as to allow the introduction of said water discharge duct of the water operating installation connected to the present system.
G) A container door, rotatably connected to said framework, reversibly openable due to a common hinge system, suitable for enabling a user to access the components contained within said framework and discharge the water into the container by means of said tap. In the most advantageous embodiment, said container door is constituted at least by an upper portion and a lower portion that can be autonomously moved. Advantageously, said lower portion is adapted to allow the access exclusively to said tap to perform the water discharge operations, while upper portion is adapted to allow the access to all the other equipment pieces for possible operations of verification, maintenance and substitution of pieces. Advantageously, said container door is also provided with at least one inspection hole which enables the user to check at any time the LED lights of the light signaling device and hence know the filling level of the container without opening the upper portion of the container door. At the safety hole of the container, moreover, a water outlet hole can be arranged which allows the outflow to the exterior of the framework. This embodiment is particularly advantageous if one decides to install the system in the thickness of a wall, thus preventing the introduction of the water into the wall itself, damaging it.
H) A possible battery, suitably for power supplying at least said level detector, said acoustic signaling device and said light signaling device.
I) Possible power supply shut-off means, advantageously connected to the water operating installation to which said system is connected, suitably to automatically deactivate said water operating installation when the water level within the container exceeds a pre-established safety threshold level or if the acoustic signaling was ignored for a pre-established time period.
J) A possible common SIM card suitable for communicating, to at least one pre-established telephone number, the exceeding of the pre-established safety thresholds. Advantageously, the communication can occur according to modes pre-established by the user, by means of email, SMS, telephone or other phone communication systems.

Advantageously, together with the system described up to now, the user can be provided with an software application that the user can download and install on a personal electronic device thereof. Such software application will allow the user to remotely monitor the filling level of the container, disable possible acoustic signaling underway, disable the water operating installation connected to the collection and recovery system.

In summary, the method according to claim 9 for a correct use of the system, object of the present invention, is the following:
- installing the system at an element of a water operating installation, e.g. the motor of a climate-control unit;
- introducing the discharge duct of the water operating installation into the inlet hole of the framework and, consequently, in the upper opening of the container;
- monitoring the filling level of the container, by checking the light signaling device or by means of the software application;
- emptying the container, upon reaching the maximum filling level, opening the container door or only its lower portion, rotating the tap towards the exterior of the framework and letting the water fall in a container;
- reusing the water in household washing operations or for watering plants.

The advantages offered by the present invention are clear in light of the description set forth up to now and will be even clearer in the enclosed figures and in the relative detailed description.

### Description of the figures

The invention will be described hereinbelow in at least one preferred embodiment as a non-limiting example, with the aid of the enclosed figures in which:

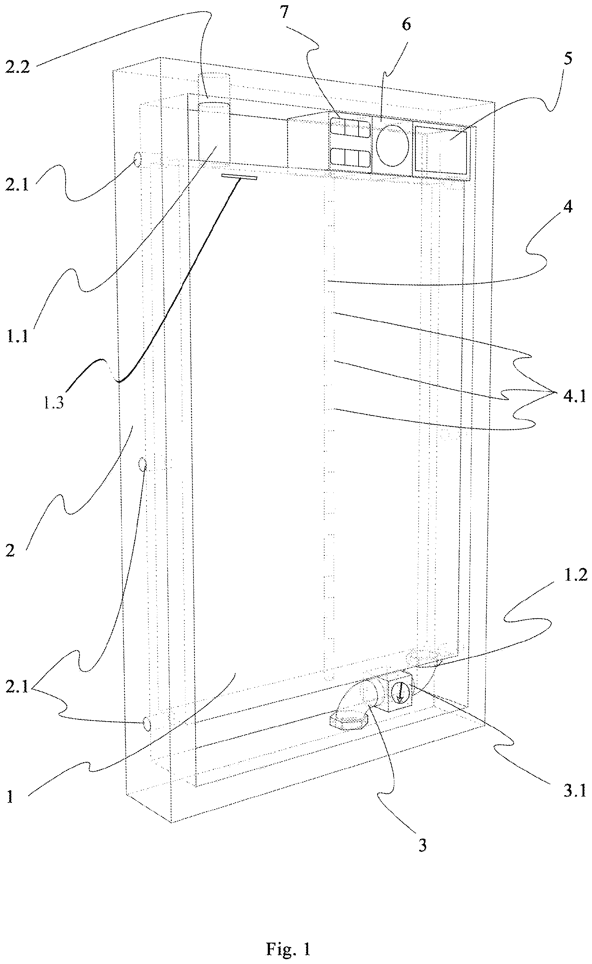

- FIGURE 1 shows a three-dimensional view of the fundamental elements of the system, object of the invention. One sees the container 1 with the upper opening 1.1, the lower opening 1.2 and the safety hole 1.3, the framework 2 with the engagement means 2.1 and the inlet hole 2.2 placed on the upper part, aligned with the upper hole 1.1 of said container 1. Below all of the above, the tap 3 is visible with the control valve 3.1. Inside the container 1, one sees the level detector 4 with the relative sensors 4.1. Between container 1 and framework 2, housings of batteries 5, acoustic signaling device 6 and light signaling device 7 are visible.

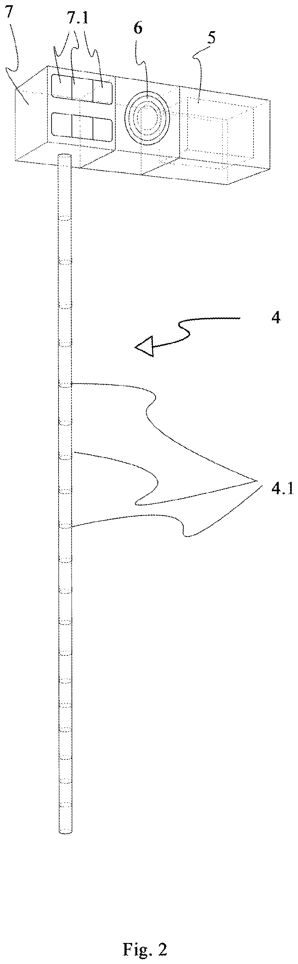

- FIGURE 2 illustrates several components more in detail, including the housing of the batteries 5, the acoustic signaling device 6 and the light signaling device 7 in which, at each LED 7.1, a sensor 4.1 of the level detector 4 is connected.

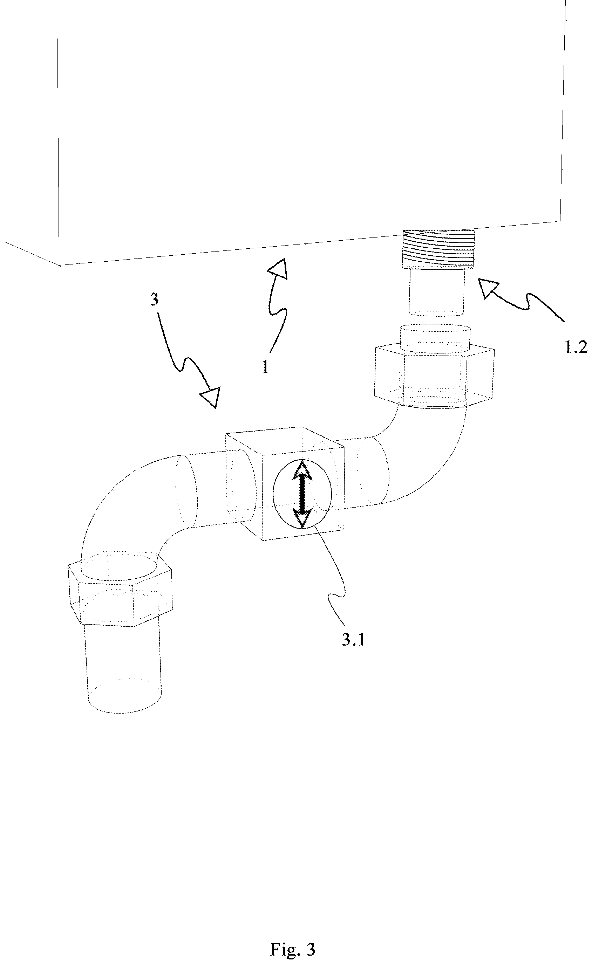

- FIGURE 3 shows in more detail the rotatable tap 3 connected to the lower opening 1.2 of the container 1, provided with valve 3 for the controlled emptying of the container 1.
- FIGURE 4 shows the container door 8 which covers the entire instrumentation divided into the upper portion 8.1 and lower portion 8.2 and in which an inspection hole 8.3 is visible.

### Detailed description of the invention

The present invention will now be illustrated as a merely exemplifying and non-limiting or non-constraining example, with reference to the figures which illustrate several embodiments relative to the present inventive concept.

With reference to FIG. 1, the fundamental components of the system, object of the invention, are shown overall; the object of such system is to collect the discharge water of any one pre-existing household installation and make it available for other uses, preventing its dispersion. The preferred embodiment described hereinbelow, moreover, has as further object that of making the quantity of water contained in the system remotely monitorable, and being able to use it without having to leave one's home in order to collect it.

More in detail, FIG. 1 shows a framework 2, with dimensions comprised between 20 cm X 2.5 cm X 20 cm in height and 100 cm X 20 cm X 100 cm in height, which contains all the functional elements of the system and which is provided with mechanical engagement means 2.1 that enable the wall installation of the system. In order to complete the aforesaid function, the installation of the system will occur below the installation element which produces the discharge water to be collected and within the thickness of the wall, such that all the components of the system are accessible from the interior of the home. Said framework 2, at its upper side, is provided with an inlet hole 2.2 which enables the introduction of the discharge duct of the water of the water operating installation connected to the present system.

In the immediate area of the inlet hole 2.2, an upper opening 1.1 of the container 1 is situated in which the discharge water is collected that is situated within said framework 2. Preferably said container 1 will be made of transparent plastic, in order to be able to view the level of the water at its interior. The capacity of the container 1, depending on the requirements, can vary between 5 1 and 20 1, preferably 12 l.

Even if the container 1 is transparent, a level detector 4 is placed at its interior in order to automatically check the quantity of collected water and hence the user no longer has to periodically check the filling level.

Due to the components described hereinbelow, in fact, the user will be warned, by means of signals of various type, when the container 1 is full or nearly full, according to pre-established settings.

Said level detector 4 is constituted by a vertical rod with length at least equal to the depth of the container 1 so as to reach the bottom thereof. On the length thereof, equidistant from each other, a plurality of sensors 4.1 are present that are suitable to detect the presence or lack of presence of water at the depth at which they are situated. Each sensor 4.1 is connected to a respective LED light 7.1 belonging to a light signaling device 7 arranged above the container 1, but within the framework 2.

In the preferred embodiment, said LED lights 7.1 will be differentiated by color: green for those connected to the sensors 4.1 placed further down, yellow for the LED lights 7.1 connected to a predetermined quantity of intermediate sensors 4.1, and red for the LED lights 7.1 connected to the final sensors 4.1, i.e. those placed higher, with respect to the level detector 4, which will turn on when said container 1 is nearly full.

When said container 1 is close to being completely full, an acoustic signaling device 6 will come into operation. Preferably the acoustic signaling will be of intermittent type, with time intervals increasingly closer with the increase of the level of the water collected in the container 1.

A further safety system that can be provided, in order to prevent the dangers connected to the outflow of the water from a full container 1, is the arrangement of electrical power supply shut-off means, connected to the water operating installation to which said system is connected. More specifically, when the acoustic alarm is ignored beyond a pre-established time period, the power supply shut-off means automatically deactivate the water operating installation, and thus prevent the undesired outflow of the water from the container 1.

For the purpose of the remote control of the system, in the embodiment that is currently considered to be the best, the system also comprises a common SIM card adapted to communicate with at least one pre-established telephone number, probably that of the owner of the installation. In a first version, the user whose number is connected to the SIM will be warned of the exceeding of a pre-established filling threshold, by means of an SMS. In an even more complete embodiment, the communication between the user and the system occurs by means of a dedicated software application with which the user can monitor the filling level of said container 1, disable possible acoustic signaling underway, disable the water operating installation connected to the collection and recovery system.

In case of lack of operation of all the provided safety systems, the container 1 is also provided, in proximity to its upper limit, with at least one safety hole 1.3, possibly at a water outlet hole placed on the container door. This acts as an "overflow" of the sinks which allows the outflow of water from the container 1 in case of lack of emptying by the user.

In order to perform the water discharge operations, the container 1 is provided with a lower opening 1.2 to which a rotatably and reversible openable tap 3 is connected.

During the collection of the water, in fact, said tap is closed and rotated so as to be included in the shape of the framework 2. For the discharge, the user, accessing the space of the framework 2 dedicated to the tap 3, first rotates it outward, directing it towards a container into which the water is discharged for reuse, and then he/she opens the opening valve 3.1 which causes the start of the outflow of the water from the container 1.

The access to the above-described components occurs by means of a common container door 8, provided with an upper portion 8.1 and a lower portion 8.2. The first will be used by the user presumably in a sporadic manner, to perform operations of checking, maintenance and possible substitution of pieces of the system. The lower portion 8.2, instead, is suitable for enabling the access exclusively to said tap 3 to perform the water discharge operations and, therefore, will be the part of the container door that is most frequently used.

As stated above, the opening of the container door 8, which will preferably be of hinge type, constrained on one side of the framework 2, will be directed towards the interior of the home.

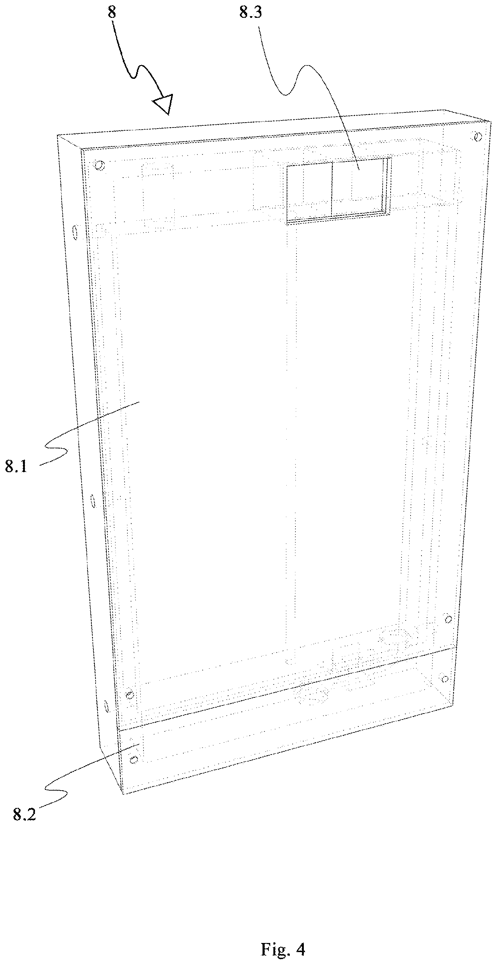

As is visible in FIG. 4, the container door 8 will be provided with at least one inspection hole 8.3 adapted to allow the user to check, at any time, said LED lights 7.1 of the light signaling device 7.

The operation of the system, object of the present patent application, can be electrical, connected to the home power grid, or battery-powered, due to a suitable housing 5 of batteries which power supply the level detector 4, the acoustic signaling device 6 and the light signaling device 7.

Another object of patent projection, offered by the enclosed claims, is the method linked to the system for collecting and recovering the water of a household water operating installation. Said method comprises the steps of:
- installing the system for collecting and recovering the water according to any one embodiment, directly mentioned in the above description or clearly inferable therefrom, at one element of a water operating installation;
- introducing the discharge duct of the water operating installation into the inlet hole 2.2 of the framework 2 and, consequently, into the upper opening 1.1 of the container 1;
- monitoring the filling level of the container 1, by checking the light signaling device 7 or by means of the software application;
- emptying of the container 1, upon reaching the maximum filling level, opening the container door 8-8.2, rotating the tap 3 towards the exterior of the framework 2 and letting the water fall into a container;
- reusing the water in household washing operations or for watering plants.

Finally, it is clear that modifications, additions or variations that are obvious for a man skilled in the art can be made to the invention described up to now, without departing from the protective scope that is provided by the enclosed claims.

## Claims

1. System for collecting and recovering the discharge water of household installations, suitable to be connected to any discharge duct of a pre-existing water operating installation for collecting the water thereof, the system comprises:
A) a framwork (2) and at least one liquids container (1), made of any synthetic or natural polymer, with maximum capacity comprised between 5 1 and 20 1, provided with at least one upper opening (1.1) and one lower opening (1.2); said upper opening (1.1) being suitable to receive the water coming from at least one discharge duct of a water operating installation; said lower opening (1.2) being suitable to be reversibly opened to allow emptying said container (1); said container (1) also being provided with at least one safety hole (1.3), arranged in proximity to the upper edge thereof suitable to enable the outflow of the water contained therein in case of lack of emptying of the container (1);
B) at least one tap (3) included in the shape of the framework (2), said at least one tap connected to said lower opening (1.2) of said container (1),
provided with an opening valve (3.1) suitable to be opened or closed by a user to reversibly enable or block the outflow of the water contained in said container (1) to the exterior; said tap (3) being of the rotatable type, suitable to rotate outward from the framework (2) in the horizontal plane, directing it towards a container into which the water is discharged for reuse, to enable the user to direct the water jet in the desired direction;
C) at least one level detector (4), consisting of a vertical rod with length at least equal to the depth of said container (1) so as to reach the bottom thereof; said detector (4) being provided with a plurality of sensors (4.1) equally spaced from each other, suitable to detect the filling level of the container (1); each of said sensors (4.1) being connected to
D) at least one light signaling device (7), connected to said level detector (4), suitable to show the user the filling level of the container (1) by means of the progressive lighting of a plurality of LED lights (7.1);
E) at least one acoustic signaling device (6), connected to said level detector (4), suitable to emit a predetermined sound, possibly repeated at regular and pre-established time intervals, when the level of the water present in said container (1) exceeds a pre-established threshold value;
F) the framework (2), made of any metal or metal alloy, suitable to include all the
previously listed equipment in a parallelepiped-shaped structure; said framework (2) being provided with engagement means (2.1) suitable to enable the stable installation thereof on a wall or on any support structure; said framework (2) also being provided with at least one inlet hole (2.2) suitable to enable the introduction of said water discharge duct of a water operating installation, positioned at said upper opening (1.1) of said container (1);
G) at least one container door (8), rotatably connected to said framework (2), reversibly openable by means of a common hinge system, suitable to enable a user to access the components contained in said framework (2) and discharge the water contained in the container (1) by means of said tap (3); said container door (8)
being provided with at least one inspection hole (8.3) suitable to enable the user to check said LED lights (7.1) of said light signaling device (7) at any time.

2. System for collecting and recovering the discharge water of household installations, according to the preceding claim 1, **characterized in that** it also comprises at least one common battery (5) suitable to power supply said level detector (4), said acoustic signaling device (6) and said light signaling device (7).

3. System for collecting and recovering the discharge water of household installations, according to any one of the preceding claims 1 or 2, **characterized in that** it is provided with power supply shut-off means, connected to the water operating installation to which said system is connected; said power supply shut-off means being suitable to automatically de-activate said water operating installation when the water level inside the container (1) exceeds a pre-established safety threshold level or should the acoustic signal be ignored beyond a pre-established time.

4. System for collecting and recovering the discharge water of household installations, according to any one of the preceding claims, **characterized in that** said container door (8) consists of at least one upper portion (8.1) and one lower portion (8.2) that can be moved autonomously; said upper portion (8.1) being suitable to enable access to the container (1), to the light signaling device (7), to the acoustic signaling device (6), to the detector (4) and to any battery (5); said lower portion (8.2) being suitable to enable access exclusively to said tap (3) to perform the water discharge operations; said upper portion (8.1) also having a water outlet hole arranged at the safety hole (1.3) of the container (1), suitable to enable the outflow of the excess water to the exterior of the framework (2).

5. System for collecting and recovering the discharge water of household installations, according to any one of the preceding claims, **characterized in that** it is suitably positioned so that said tap (3) is accessible from an environment inside the building in which said system is installed.

6. System for collecting and recovering the discharge water of household installations, according to any one of the preceding claims, **characterized in that** it is provided with a common SIM card suitable to communicate to at least one pre-established telephone number, the exceeding of the pre-established safety thresholds regarding the filling level of the container (1); said communication occurring, by way of example, by means of an SMS.

7. System for collecting and recovering the discharge water of household installations,
according to any one of the preceding claims, **characterized in that** said container (1) is made of a transparent plastic polymer.

8. System for collecting and recovering the discharge water of household installations,
according to any one of the preceding claims, **characterized in that** it is inscribable in a parallelepiped-shaped element with dimensions comprised between 20 cm X 2.5 cm X 20 cm in height and 100 cm X 20 cm X 100 cm in height.

9. Method for collecting and recovering the discharge water of household installations,
**characterized in that** it comprises the steps of:
- installing the water collection and recovery system according to any one of the preceding claims, at a water operating installation;
- introducing the discharge duct of the water operating installation into the inlet hole (2.2) of the framework (2) and, thus, into the upper opening (1.1) of the container (1);
- monitoring the filling level of the container (1), by checking the light signaling device (7) or by means of a software application;
- emptying the container (1), upon reaching the maximum filling level, by opening the container door (8), turning the tap (3) towards the exterior of the framework (2) and letting the water fall into a container;
- reusing the water in household washing operations or for watering plants.

## Patentansprüche

1. System zum Sammeln und Rückgewinnen des Abwassers von Haushaltsinstallationen, das geeignet ist, an eine beliebige Abflussleitung einer bereits bestehenden, Wasser betätigenden Installation angeschlossen zu werden, um das Wasser derselben zu sammeln, wobei das System aufweist:
A) einen Rahmen (2) und zumindest einen Flüssigkeitenbehälter (1), der aus einem beliebigen synthetischen oder natürlichen Polymer hergestellt ist, mit einem maximalen Fassungsvermögen zwischen 5 1 und 20 1, der mit zumindest einer oberen Öffnung (1.1) und einer unteren Öffnung (1.2) versehen ist; wobei die obere Öffnung (1.1) geeignet ist, das von zumindest einer Abflussleitung einer Wasser betätigenden Installation kommende Wasser aufzunehmen; wobei die untere Öffnung (1. 2) geeignet ist, reversibel geöffnet zu werden, um das Entleeren des Behälters (1) zu ermöglichen; wobei der Behälter (1) auch mit zumindest einer Sicherheitsöffnung (1.3) versehen ist, die in der Nähe seines oberen Randes angeordnet und geeignet ist, den Abfluss des darin enthaltenen Wassers zu ermöglichen, falls der Behälter (1) nicht entleert wird;
B) zumindest einen Hahn (3), der in der Form des Rahmens (2) enthalten ist, wobei der zumindest eine Hahn (3) mit der unteren Öffnung (1.2) des Behälters (1) verbunden ist und mit einem Öffnungsventil (3.1) versehen ist, das geeignet ist, von einem Nutzer geöffnet oder geschlossen zu werden, um den Abfluss des in dem Behälter (1) enthaltenen Wassers nach außen reversibel zu ermöglichen oder zu blockieren; wobei der Hahn (3) vom drehbaren Typ ist, der geeignet ist, sich von dem Rahmen (2) in der horizontalen Ebene nach außen zu drehen, wobei er in Richtung eines Behälters gelenkt wird, in den das Wasser zur Wiederverwendung abgeleitet wird, um es dem Nutzer zu ermöglichen, den Wasserstrahl in die gewünschte Richtung zu lenken;
C) zumindest einen Pegel-Detektor (4), der aus einer vertikalen Stange besteht, deren Länge zumindest gleich der Tiefe des Behälters (1) ist, so dass sie den Boden desselben erreicht; wobei der Detektor (4) mit mehreren Sensoren (4.1) versehen ist, die gleichmäßig voneinander beabstandet sind und geeignet sind, den Füllstand des Behälters (1) zu erfassen; wobei jeder der genannten Sensoren (4.1) verbunden ist mit
D) zumindest einer Lichtsignalvorrichtung (7), die mit dem Pegel-Detektor (4) verbunden ist und geeignet ist, dem Nutzer den Pegel des Behälters (1) durch das fortschreitende Aufleuchten mehrerer LED-Leuchten (7.1) zu zeigen;
E) zumindest eine akustische Signalvorrichtung (6), die mit dem Pegeldetektor (4) verbunden ist und geeignet ist, einen vorgegebenen Ton abzugeben, der möglicherweise in regelmäßigen und vorher festgelegten Zeitintervallen wiederholt wird, wenn der Pegel des in dem Behälter (1) vorhandenen Wassers einen vorher festgelegten Schwellenwert überschreitet;
F) der aus einem beliebigen Metall oder einer Metalllegierung hergestellte Rahmen (2) dazu geeignet ist, sämtliche zuvor aufgeführte Ausrüstung in einer parallelepipedförmigen Struktur zu enthalten; wobei der Rahmen (2) mit Eingriffsmitteln (2.1) versehen ist, die geeignet sind, seine stabile Installation an einer Wand oder einer beliebigen Trägerstruktur zu ermöglichen; wobei der Rahmen (2) auch mit zumindest einer Einlassöffnung (2.2) versehen ist, die geeignet ist, die Einführung der Wasserabflussleitung einer Wasser betätigenden Installation zu ermöglichen und an der oberen Öffnung (1.1) des Behälters (1) positioniert ist;
G) zumindest eine Behältertür (8), die drehbar mit dem Rahmen (2) verbunden ist, die mittels eines üblichen Gelenksystems reversibel geöffnet werden kann und die geeignet ist, einem Nutzer den Zugang zu den in dem Rahmen (2) enthaltenen Komponenten zu ermöglichen und das in dem Behälter (1) enthaltene Wasser mittels des Hahns (3) abzulassen; wobei die Behältertür (8) mit zumindest einer Inspektionsöffnung (8.3) versehen ist, die geeignet ist, dem Nutzer zu ermöglichen, die LED-Leuchten (7.1) der Lichtsignalvorrichtung (7) jederzeit zu überprüfen.

2. System zum Sammeln und Rückgewinnen des Abwassers von Haushaltsinstallationen nach dem vorhergehenden Anspruch 1, **dadurch gekennzeichnet, dass** es außerdem zumindest eine übliche Batterie (5) aufweist, die geeignet ist, den Pegeldetektor (4), die akustische Signalvorrichtung (6) und die Lichtsignalvorrichtung (7) mit Leistung zu versorgen.

3. System zum Sammeln und Rückgewinnen des Abwassers von Haushaltsinstallationen nach einem der vorhergehenden Ansprüche 1 oder 2, **dadurch gekennzeichnet, dass** es mit Leistungsversorgungsabschaltmitteln versehen ist, die an die Wasser betätigende Installation, an die das System angeschlossen ist, angeschlossen sind; wobei die Leistungsversorgungsabschaltmittel geeignet sind, die Wasser betätigende Installation automatisch zu deaktivieren, wenn der Pegel in dem Behälter (1) einen vorher festgelegten Sicherheitsschwellenwert überschreitet oder das akustische Signal über eine vorher festgelegte Zeit hinaus ignoriert werden sollte.

4. System zum Sammeln und Rückgewinnen des Abwassers von Haushaltsinstallationen nach einem der vorhergehenden Ansprüche, **dadurch gekennzeichnet, dass** die Behältertür (8) zumindest aus einem oberen Teil (8.1) und einem unteren Teil (8.2) besteht, die autonom bewegt werden können; wobei der obere Teil (8.1) geeignet ist, einen Zugang zu dem Behälter (1), zu der Lichtsignaleinrichtung (7), zu der akustischen Signaleinrichtung (6), zu dem Detektor (4) und zu einer Batterie (5) zu ermöglichen; wobei der untere Teil (8. 2) geeignet ist, einen Zugang ausschließlich zu dem Hahn (3) zu ermöglichen, um die Wasserablassvorgänge durchzuführen; der obere Teil (8.1) auch eine Wasserauslassöffnung aufweist, die an der Sicherheitsöffnung (1.3) des Behälters (1) angeordnet ist und geeignet ist, den Abfluss des überschüssigen Wassers nach außerhalb des Rahmens (2) zu ermöglichen.

5. System zum Sammeln und Rückgewinnen des Abwassers von Haushaltsinstallationen nach einem der vorhergehenden Ansprüche, **dadurch gekennzeichnet, dass** es in geeigneter Weise so angeordnet ist, dass der Hahn (3) von einer Umgebung innerhalb des Gebäudes, in dem das System installiert ist, zugänglich ist.

6. System zum Sammeln und Rückgewinnen des Abwassers von Haushaltsinstallationen nach einem der vorhergehenden Ansprüche, **dadurch gekennzeichnet, dass** es mit einer üblichen SIM-Karte versehen ist, die geeignet ist, an zumindest eine vorher festgelegte Telefonnummer das Überschreiten der vorher festgelegten Sicherheitsschwellen bezüglich des Füllpegels des Behälters (1) zu kommunizieren, wobei die Kommunikation zum Beispiel mittels einer SMS erfolgt.

7. System zum Sammeln und Rückgewinnen des Abwassers von Haushaltsinstallationen nach einem der vorhergehenden Ansprüche, **dadurch gekennzeichnet, dass** der Behälter (1) aus einem transparenten Kunststoffpolymer hergestellt ist.

8. System zum Sammeln und Rückgewinnen des Abwassers von Haushaltsinstallationen nach einem der vorhergehenden Ansprüche, **dadurch gekennzeichnet, dass** es in ein parallelepipedförmiges Element mit Abmessungen zwischen 20 cm X 2,5 cm X 20 cm in der Höhe und 100 cm X 20 cm X 100 cm in der Höhe einbeschreibbar ist.

9. Verfahren zum Sammeln und Rückgewinnen des Abwassers von Haushaltsinstallationen, **dadurch gekennzeichnet, dass** es die folgenden Schritte aufweist:
- Installieren des Wassersammel- und -rückgewinnungssystems nach einem der vorhergehenden Ansprüche an einer Wasser betätigende Installation;
- Einführen der Abflussleitung der Wasser betätigenden Installation in die Einlassöffnung (2.2) des Rahmens (2) und somit in die obere Öffnung (1. 1) des Behälters (1);
- Überwachen des Füllpegels des Behälters (1) durch Überprüfen der Lichtsignaleinrichtung (7) oder mittels einer Softwareanwendung;
- Entleeren des Behälters (1) auf das Erreichen des maximalen Füllpegels hin durch Öffnen der Behältertür (8), Drehen des Hahns (3) zu der Außenseite des Rahmens (2) hin und Fallenlassen des Wassers in einen Behälter;
- Wiederverwenden des Wassers für Waschvorgänge im Haushalt oder zum Bewässern von Pflanzen.

## Revendications

1. Système pour collecter et récupérer l'eau d'évacuation d'installations domestiques, apte à être relié à une conduite d'évacuation quelconque d'une installation d'utilisation d'eau préexistante pour collecter l'eau de celle-ci, le système comprend :
A) un châssis (2) et au moins un contenant de liquides (1), fait d'un polymère synthétique ou naturel quelconque, d'une capacité maximum comprise entre 5 l et 20 l, pourvu d'au moins une ouverture supérieure (1.1) et une ouverture inférieure (1.2) ; ladite ouverture supérieure β(1.1) étant apte à recevoir l'eau venant d'au moins une conduite d'évacuation d'une installation d'utilisation d'eau ; ladite couverture inférieure (1.2) étant apte à être ouverte de manière réversible pour permettre de vider ledit contenant (1) ; ledit contenant (1) étant également pourvu d'au moins un trou de sécurité (1.3), arrangé à proximité du bord supérieur dudit contenant, apte à permettre l'écoulement de l'eau contenue dans celui-ci en cas de manque de remplissage du récipient (1) ;
B) au moins un robinet (3) inclus dans la forme du châssis (2), ledit au moins un robinet (3) est relié à ladite ouverture inférieure (1.2) dudit contenant (1), pourvu d'une vanne d'ouverture (3.1) apte à être ouverte ou fermée par un utilisateur pour permettre ou bloquer de manière réversible l'écoulement de l'eau contenue dans ledit contenant (1) vers l'extérieur; ledit robinet (3) étant du type rotatif, apte à tourner vers l'extérieur depuis le châssis (2) dans le plan horizontal, en se dirigeant vers un contenant dans lequel l'eau est évacuée en vue d'une réutilisation, pour permettre à l'utilisateur de diriger le jet d'eau dans la direction souhaitée ;
C) au moins un détecteur de niveau (4), consistant en une tige verticale d'une longueur au moins égale à la profondeur dudit contenant (1) de manière à atteindre le fond de celui-ci ; ledit détecteur (4) étant pourvu d'une pluralité de capteurs (4.1) à égale distance les uns des autres, aptes à détecter le niveau de remplissage du contenant (1) ; chacun desdits capteurs (4.1) étant relié à
D) au moins un dispositif de signalisation lumineuse (7), relié audit détecteur de niveau (4), apte à montrer à l'utilisateur le niveau de remplissage du contenant (1) à l'aide de l'allumage progressif d'une pluralité de lampes à LED (7.1) ;
E) au moins un dispositif de signalisation acoustique (6), relié audit détecteur de niveau (4) pour émettre un son prédéterminé, éventuellement répété à intervalles de temps réguliers et préétablis, quand le niveau de l'eau présente dans ledit contenant (1) dépasse une valeur seuil préétablie ;
F) le châssis (2) fait d'un métal ou alliage de métal quelconque, apte à inclure tous les équipements énumérés précédemment dans une structure de forme parallélépipédique ; ledit châssis (2) étant pourvu de moyens d'engagement (2.1) aptes à permettre son installation stable sur une paroi ou sur une structure de support quelconque ; ledit châssis (2) étant également pourvu d'au moins un trou d'entrée (2.2) apte à permettre l'introduction de ladite conduite d'évacuation d'eau d'une installation d'utilisation d'eau, positionné à ladite ouverture supérieure (1.1) dudit contenant (1) ;
G) au moins une porte de contenant (8), reliée à rotation audit châssis (2), apte à être ouverte de manière réversible à l'aide d'un système d'articulation commun, apte à permettre à un utilisateur d'accéder aux composants contenus dans ledit châssis (2) et à évacuer l'eau contenue dans le contenant (1) à l'aide dudit robinet (3) ; ladite porte de contenant (8) étant pourvue d'au moins un trou de regard (8.3) apte à permettre à l'utilisateur de vérifier lesdites lampes à LED (7.1) dudit dispositif de signalisation lumineux (7) à tout moment.

2. Système pour collecter et récupérer l'eau d'évacuation d'installations domestiques, selon la revendication 1 précédente, **caractérisé en ce qu'il** comprend également au moins une batterie commune (5) apte à alimenter en électricité ledit détecteur de niveau (4), ledit dispositif de signalisation acoustique (6) et ledit dispositif de signalisation lumineuse (7).

3. Système pour collecter et récupérer l'eau d'évacuation d'installations domestiques, selon l'une quelconque des revendications 1 ou 2 précédentes, **caractérisé en ce qu'il** est pourvu de moyens de coupure d'alimentation électrique, reliés à l'installation d'utilisation d'eau à laquelle ledit système est relié ; lesdits moyens de coupure d'alimentation électrique étant aptes à désactiver automatiquement ladite installation d'utilisation d'eau quand le niveau de liquide à l'intérieur du contenant (1) dépasse un niveau seuil de sécurité préétabli ou au cas où le signal acoustique est ignoré au-delà d'une durée préétablie.

4. Système pour collecter et récupérer l'eau d'évacuation d'installations domestiques, selon l'une quelconque des revendications précédentes, **caractérisé en ce que** la porte de contenant (8) consiste en au moins une partie supérieure (8.1) et une partie inférieure (8.2) qui peuvent être déplacées de manière autonome ; ladite partie supérieure (8.1) étant apte à permettre l'accès au contenant (1), au dispositif de signalisation lumineuse (7), au dispositif de signalisation acoustique (6), au détecteur (4) et à toute batterie (5) ; ladite partie inférieure (8.2) étant apte à permettre l'accès exclusivement audit robinet (3) pour réaliser les opérations d'évacuation d'eau ; ladite partie supérieure (8.1) ayant également un trou de sortie d'eau arrangé au trou de sécurité (1.3) du contenant (1), apte à permettre l'écoulement de l'excès d'eau vers l'extérieur du châssis (2).

5. Système pour collecter et récupérer l'eau d'évacuation d'installations domestiques, selon l'une quelconque des revendications précédentes, **caractérisé en ce qu'il** est positionné de manière appropriée de telle sorte que le robinet (3) soit accessible depuis un environnement à l'intérieur du bâtiment dans lequel ledit système est installé.

6. Système pour collecter et récupérer l'eau d'évacuation d'installations domestiques, selon l'une quelconque des revendications précédentes, **caractérisé en ce qu'il** est pourvu d'une carte SIM commune apte à communiquer à au moins un numéro de téléphone préétabli, le dépassement des seuils de sécurité préétablis en ce qui concerne le niveau de remplissage du contenant (1) ; ladite communication se produisant, à titre d'exemple, à l'aide d'un SMS.

7. Système pour collecter et récupérer l'eau d'évacuation d'installations domestiques, selon l'une quelconque des revendications précédentes, **caractérisé en ce que** ledit contenant (1) est fait d'un polymère plastique transparent.

8. Système pour collecter et récupérer l'eau d'évacuation d'installations domestiques, selon l'une quelconque des revendications précédentes, **caractérisé en ce qu'il** peut s'inscrire dans un élément de forme parallélépipédique de dimensions comprises entre 20 cm X 2,5 cm X 20 cm en hauteur et 100 cm X 20 cm X 100 cm en hauteur.

9. Procédé pour collecter et récupérer l'eau d'évacuation d'installations domestiques, **caractérisé en ce qu'il** comprend les étapes :
- d'installation du système de collecte et de récupération d'eau selon l'une quelconque des revendications précédentes, sur une installation d'utilisation d'eau ;
- d'introduction de la conduite d'évacuation de l'installation d'utilisation d'eau dans le trou d'entrée (2.2) du châssis (2) et, ainsi, dans l'ouverture supérieure (1.1) du contenant (1) ;
- de surveillance du niveau de remplissage du contenant (1), en vérifiant le dispositif de signalisation lumineuse (7) ou à l'aide d'une application logicielle ;
- de vidage du contenant (1), lorsque le niveau de remplissage maximum est atteint, en ouvrant la porte de contenant (8), en tournant le robinet (3) vers l'extérieur du châssis (2) et en laissant l'eau couler dans un contenant ;
- de réutilisation de l'eau dans des opérations de lavage domestiques ou pour des installations d'arrosage.
